# EUROPÄISCHE PATENTSCHRIFT

(11) **EP 1 053 900 B1**
(45) Veröffentlichungstag und Bekanntmachung des Hinweises auf die Patenterteilung: **31.08.2005**
(21) Anmeldenummer: 00117987.8
(22) Anmeldetag: 17.12.1997
(51) Int. Cl.: B60J 7/185

(54) **Verschlussvorrichtung für ein Cabriolet-Verdeck**
Locking device for convertible top
Système de verrouillage pour capote de convertible

(30) Priorität: 30.12.1996 DE 29622540 U
(43) Veröffentlichungstag der Anmeldung: 22.11.2000
(62) Teilanmeldung aus: 97122239.3
(73) Patentinhaber: Wilhelm Karmann GmbH, 49084 Osnabrück (DE)
(72) Erfinder: Schmitz, Hermann, 49716 Meppen (DE)
(74) Vertreter: Busse & Busse Patentanwälte

(56) Entgegenhaltungen:
- GB-A- 620 669

## Beschreibung

Die Erfindung bezieht sich auf eine Verschlußvorrichtung für ein an einem Karosserierahmenteil lösbar festlegbares Cabriolet-Verdeck nach dem Oberbegriff des Anspruches 1.

Verschlußvorrichtungen der eingangs genannten Arten finden Verwendung, um Cabriolet-Verdecke an Windschutzscheibenrahmen von Kraftfahrzeugen festzulegen. Bei Verschlußvorrichtungen nach dem Oberbegriff des Anspruchs 1 sind Verschlußelemente in den seitlichen Bereichen des Cabriolet-Verdeckes bzw. des Windschutzscheibenrahmens angeordnet. Mittig hingegen ist ein Betätigungsorgan angeordnet, das entweder über einen motorischen Antrieb oder von Hand um eine im wesentlichen vertikale Achse drehbar ist und über ein Antriebsgestänge, das die Drehbewegung des zentralen Betätigungsorgans in eine Zug- oder Schubbewegung zur Betätigung der Verschlußelemente umsetzt, mit den seitlichen Verschlußelementen verbunden ist. Am Übergang zwischen dem Antriebsgestänge und den schwenkbaren Verschlußelementen muß eine erneute Kraftumlenkung stattfinden, um die im wesentlichen Translation des Antriebsgestänges in die Schwenkbewegung der Riegelorgane umsetzen zu können.

Die EP 0 492 006 A1 offenbart eine Verschlußvorrichtung, bei der im Übergangsbereich zwischen dem Zug-Schub-Gestänge und dem schwenkbaren Riegelorgan eine doppelte Kulissenführung ausgebildet ist, die einerseits die Endbereiche des Antriebsgestänges in eine Führungsbahn lenkt und andererseits die Schwenkachse des Riegelorgans in Abhängigkeit von dessen Schwenkwinkel entlang einer Kulissenbahn verfährt, so daß diese Schwenkachse nicht ortsfest gegenüber dem Riegelorgan ist, sondern sich im Laufe des Einschwenkens des Riegelorgans in die Verschlußposition in Richtung der Spitze von dessen Hakenende verschiebt.

Mit dieser Anordnung gehen die Nachteile einher, daß einerseits in ausgeschwenkter Position der das Riegelorgan ausbildende Haken weit nach außen vorsteht, da hier die Schwenkachse des Hakens in der am weitesten der Hakenspitze abgewandten Position liegt. Dadurch greift der Haken sehr tief in ein das Widerlager tragendes Aufnahmeteil ein, das dementsprechend eine sehr hohe Bauhöhe aufweisen muß, was sowohl bei Anordnung des Widerlagers am Verdeck als auch am Windschutzscheibenrahmen unerwünscht ist.Zudem bildet die doppelte Kulissenführung eine baulich komplizierte, nicht frei von Spiel herstellbare Konstruktion aus, die einen massiven Bauteilrahmen erfordert.

Wegen der Drehbewegung des zentralen Betätigungsorgans leistet das Zug-Schub-Gestänge zudem keine reine gradlinige Translationsbewegung, sondern es ist eine seitwärts gerichtete Komponente in dieser Bewegung enthalten, die bei der gezeigten Doppelkulissenführung im Sinne eines Verkantens hinderlich ist.

Aus der gattungsgemäßen GB 620669 ist eine Verschlußvorrichtung für ein an einem Karosserierahmenteil lösbar festlegbares Verdeck bekannt, bei dem ein Anschlag zum Einrasten eines Hakens in die an der Karosserie festgelegte Aufnahme vorgesehen ist, wobei der Anschlag dazu dient, daß der Haken zum Einrasten verdreht werden kann. Dieser Anschlag bildet mithin ein Widerlager, um eine Drehbewegung des Hakens überhaupt durchführen zu können. Daher ist auch mit dieser Anordnung die erforderliche Bauhöhe zum sicheren Verschließen des Verschlußteiles mittels des Hakens nicht zu verringern.

Der Erfindung liegt das Problem zugrunde, eine Verschlußvorrichtung für ein Cabriolet-Verdeck zu schaffen, bei der der Bauaufwand und insbesondere die Außenmaße des Verschlußelementes bzw. des Aufnahmeteiles des Widerlagers verringert ist.

Die Erfindung löst dieses Problem mit den Merkmalen des Patentanspruches 1. Hinsichtlich weiterer vorteilhafter Ausgestaltungen wird auf die Ansprüche 2 bis 5 verwiesen.

Durch den vorgesehenen Distanznocken ist ein zu tiefes Eindringen des Hakenteils in die Aufnahme bzw. das Widerlager blockiert. Bei voll aufgeschwenktem Hakenteil ist die Beabstandung am größten, während mit zunehmendem Einschwenken des Hakenteils die Abstandswirkung verringert ist. Somit sorgt der Distanznocken mit dem unterschiedlichen Abstand der Berührungsfläche des Distanznockens bzw. des Widerlagers oder Hakenteils zur Drehachse für das vorteilhafte Verhältnis von Vertikal- oder Einrenkbewegung zur Schwenkbewegung des Hakenteils, um diesen ein paßgenaues Einschwenken in das geringe Außenmaß aufweisende Widerlager zu ermöglichen. Es handelt sich dabei um eine Zwangsbeabstandung dieser Teile in bestimmten Bereichen des Schwenkwinkels.

Vorteilhaft ist der Distanznocken dabei an dem Hakenteil angeformt und bildet zusammen mit dem das Widerlager umgreifenden Hakenende eine Einlauföffnung für dieses aus.

Ein solcher Distanznocken kann bei verschiedenen Anordnungen von Riegelorganen Verwendung finden. Besonders vorteilhaft ist ein solcher Distanznocken an um die Fahrzeuglängsachse schwenkbaren Hakenteilen im Außenbereich von Cabriolet-Verdecken einsetzbar, die von einem zentralen Betätigungsorgan gesteuert werden.

Durch eine Aufnahmeaussparung in dem Hakenende zur arretierenden Lage an das Widerlager ist erreicht, daß die in dem Umgebungsbereich der Aussparung extrem zusammengepreßte Dichtung zwischen Cabriolet-Verdeck und Karosserierahmenteil sich ein Stück weit entspannt bei Erreichen der Endlage, so daß ein Herausführen des Schwenkhakens aus dieser arretierten Position einen sehr hohen Kraftaufwand bedeuten würde und damit diese Verschlußstellung eine zusätzlich Sicherung erfährt.

Für Verschlußvorrichtungen mit einem als zentralen Handgriff ausgebildeten Betätigungsorgan ist durch eine Blockierung des Handgriffes in seiner die Verschlußelemente in Schließstellung haltenden Ausgangslage eine zusätzliche Sicherung dieser Ausgangslage erreicht, so daß ein ungewolltes oder unbefugtes Öffnen des Verdeckes vermieden ist und erst durch Betätigung eines Verriegelungselementes eine Entriegelung der Verschlußposition möglich ist.

Vorteilhaft ist eine Blockierung nicht nur auf ein Schwenken des Handgriffes um eine horizontale Achse, sondern auch auf dessen Drehbarkeit um eine vertikale Achse bezogen, so daß sich eine doppelte Sicherung ergibt.

Weitere Vorteile und Einzelheiten ergeben sich aus der Zeichnung sowie der nachfolgenden Beschreibung mehrerer Ausführungsbeispiele des Gegenstandes der Erfindung.

In der Zeichnung zeigen:
- Fig. 1: eine schaubildliche Ansicht des in dem Cabriolet-Verdeck angeordneten Teils der Verschlußvorrichtung,

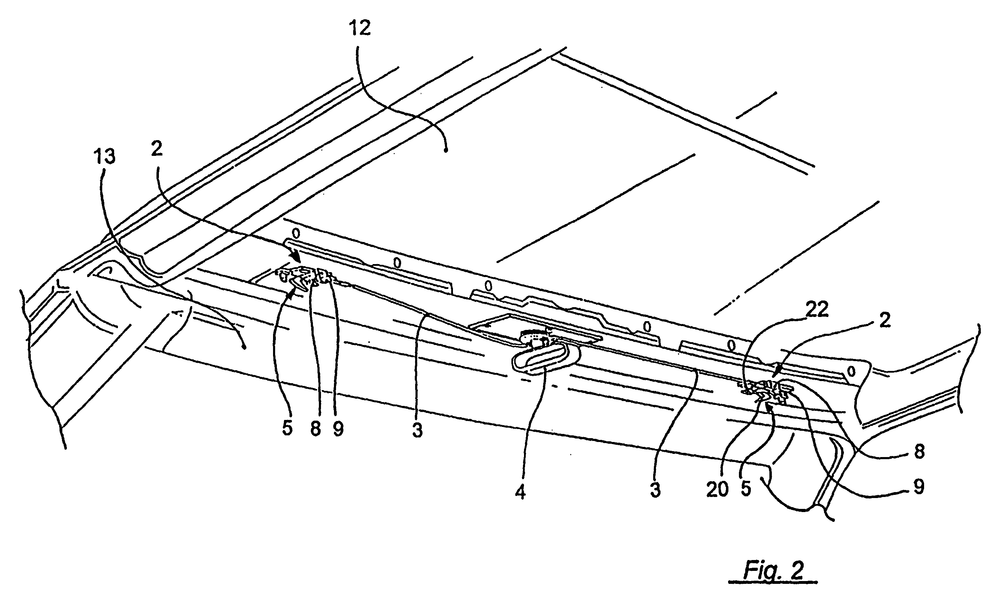

- Fig. 2: das Teil nach Fig. 1 in eingebautem Zustand im Cabriolet-Verdeck,
- Fig. 3: eine Alternativausführung einer Verschlußvorrichtung mit einer Kulissenführung in geschlossenem Zustand,
- Fig. 4: die Ausführung nach Fig. 3 in offenem Zustand,
- Fig. 5: eine schaubildliche Rückansicht der Ausführung nach Fig. 3 in geschlossenem Zustand,
- Fig. 6: eine ähnliche Ansicht zu Fig. 5 bei geöffneter Verschlußvorrichtung,
- Fig. 7: die Ausführung nach Fig. 3 in Ansicht schräg von vorne in geschlossenem Zustand,
- Fig. 8: eine ähnliche Ansicht zu Fig. 7 bei geöffneter Verschlußvorrichtung,
- Fig. 9: eine weitere Alternativausbildung einer Verschlußvorrichtung in geschlossenem Zustand,
- Fig. 10: eine ähnliche Ansicht zu Fig. 9 in teilweise geöffnetem Zustand,
- Fig. 11: eine ähnliche Ansicht zu Fig. 10 in geöffnetem Zustand der Verschlußvorrichtung,
- Fig. 12: die Ausführung nach Fig. 9 in geschlossenem Zustand,
- Fig. 13: die Ausführung nach Fig. 9 in teilweise geöffnetem Zustand,

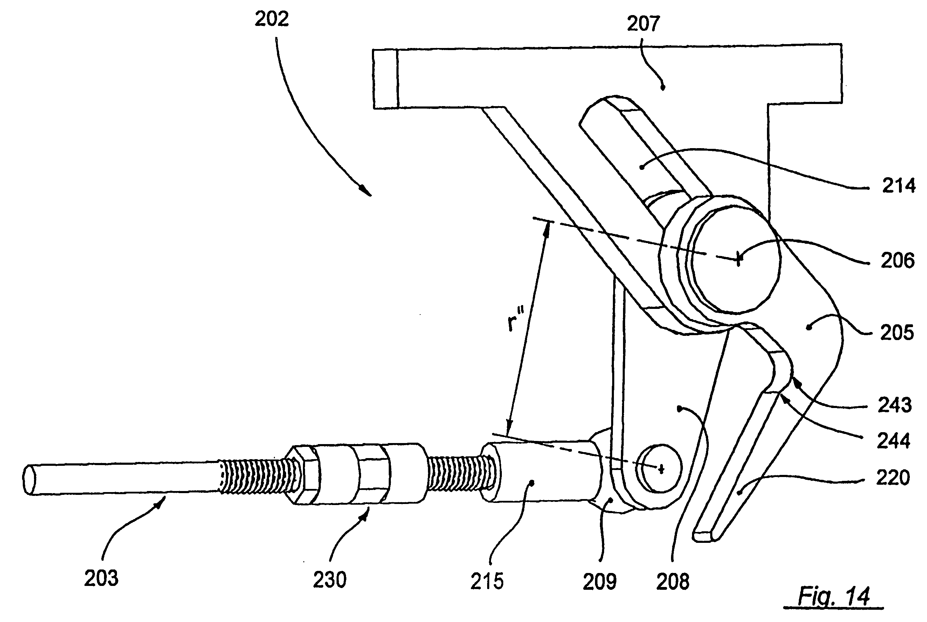

- Fig. 14: die Ausführung nach Fig. 9 in geöffnetem Zustand,

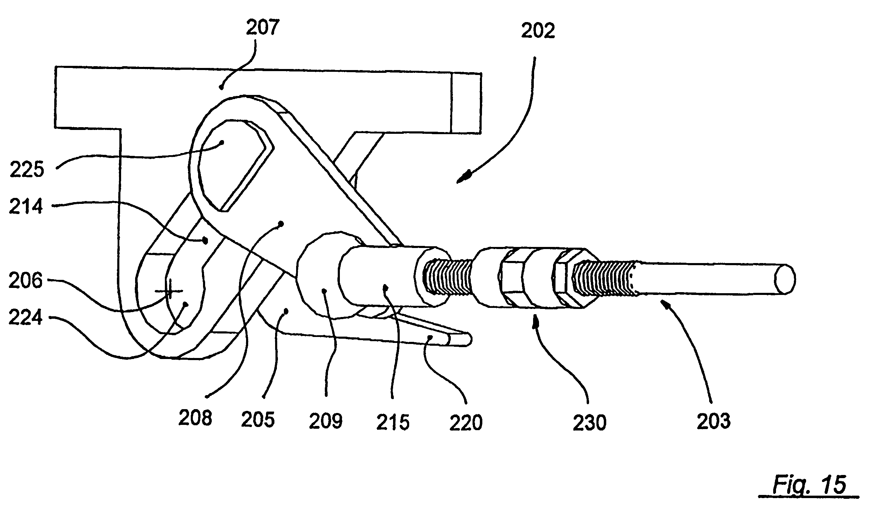

- Fig. 15: eine schaubildliche Rückansicht der Ausführung nach Fig. 9 in geschlossenem Zustand,
- Fig. 16: eine ähnliche Ansicht zu Fig. 15 in teilweise geöffnetem Zustand,

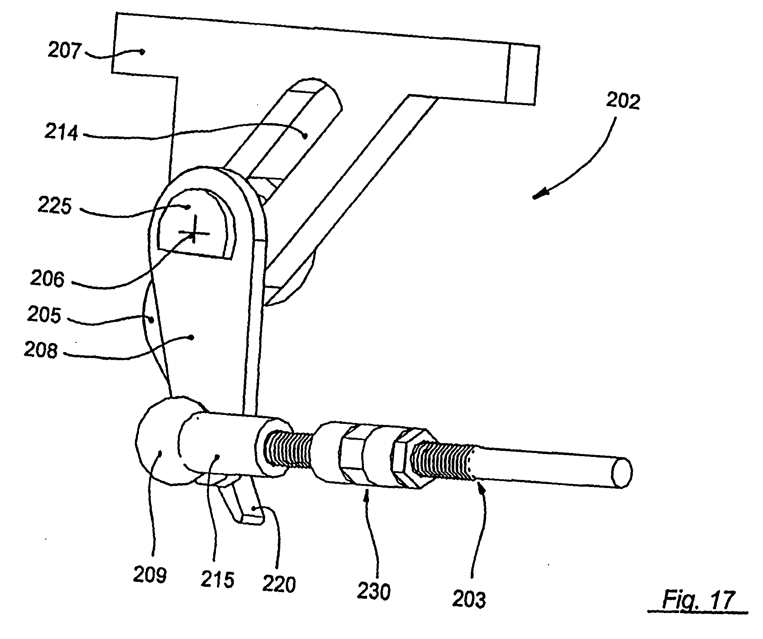

- Fig. 17: eine ähnliche Ansicht zu Fig. 15 in geöffnetem Zustand,

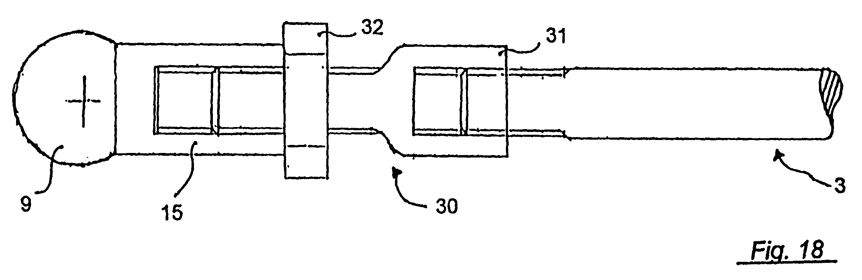

- Fig. 18: den Endbereich des Antriebsgestänges mit der abschließenden Kugelpfanne,
- Fig. 19: ein Hakenteil mit Distanznocken,
- Fig. 20: das Hakenteil nach Fig. 19 in unterschiedlichen Eingriffsphasen und Schwenkwinkeln,
- Fig. 21: das Hakenteil nach Fig. 20 in geschlossenem Zustand des Cabriolet-Verdecks,
- Fig. 22: eine ähnliche Ansicht zu Fig. 21 mit eingezeichneter Bewegungskurve des Hakenendes,

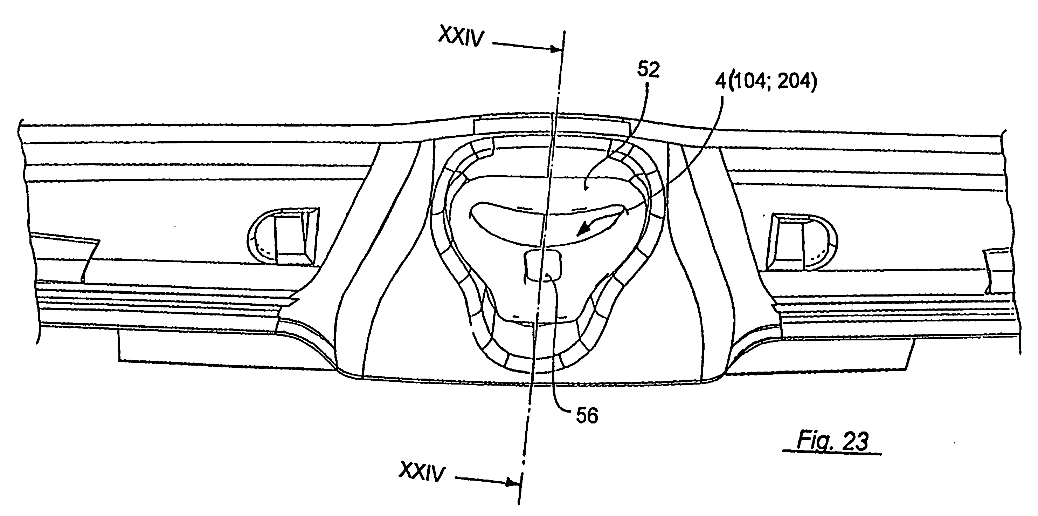

- Fig. 23: eine Draufsicht auf ein zentrales Betätigungsorgan,

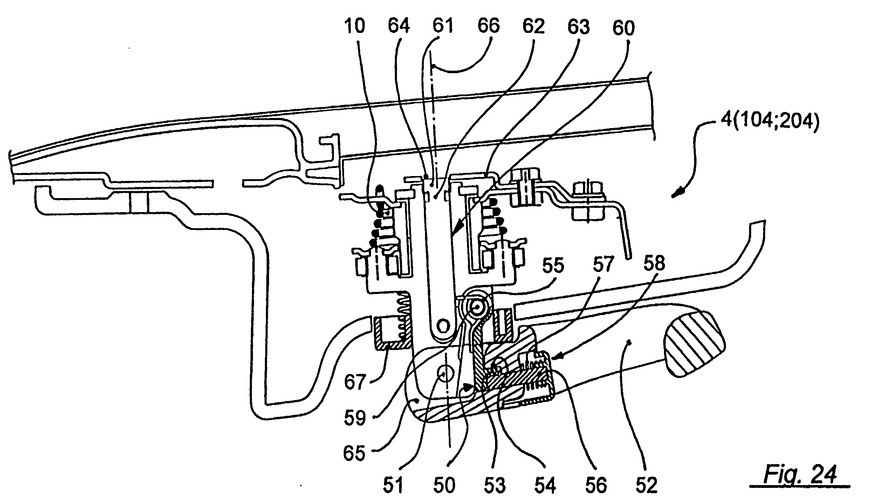

- Fig. 24: einen Schnitt entlang der Linie XXIV-XXIV in Fig. 23,
- Fig. 25: eine ähnliche Ansicht zu Fig. 24 mit aufgeschwenktem Handgriff,

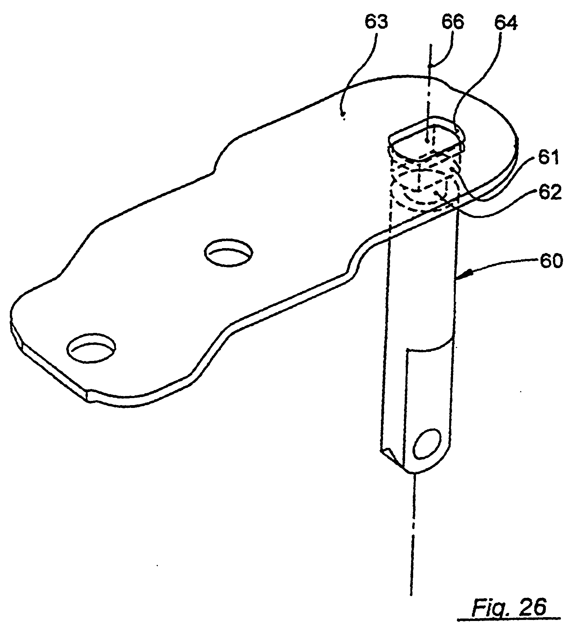

- Fig. 26: eine Explosionszeichnung des das Blockierungsmittel sperrenden Gegenstücks,

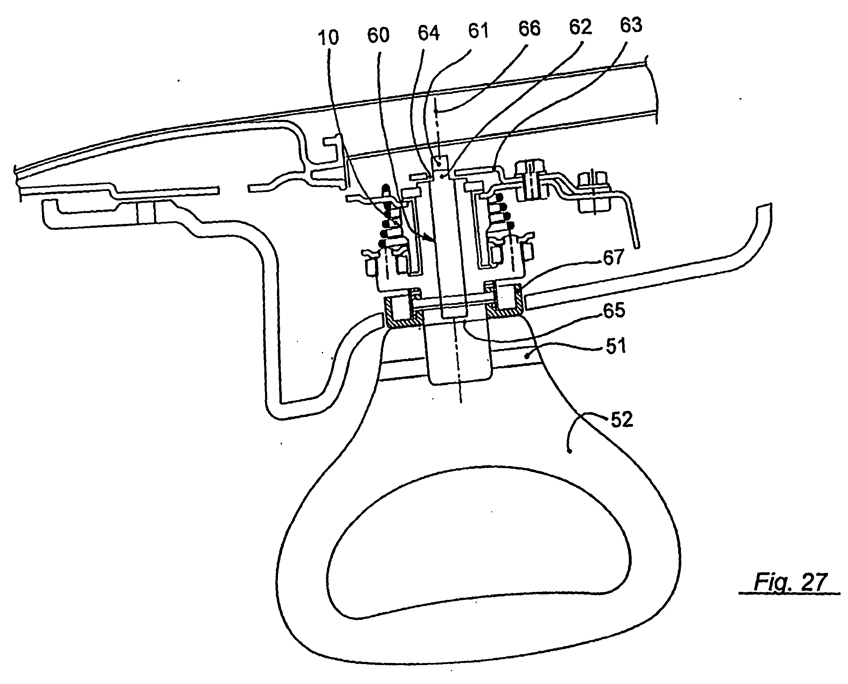

- Fig. 27: eine ähnliche Ansicht zu Fig. 26 mit um die vertikale Achse verdrehtem Handgriff.

Im einzelnen weist die Verschlußvorrichtung 1 zwei seitliche Verschlußelemente 2,102,202 auf, die über ein Antriebsgestänge 3,103,203 mit einem zentralen Betätigungsorgan 4,104,204 verbunden sind.

Die Verschlußelemente 2,102,202 weisen ein als Hakenteil ausgebildetes Riegelorgan 5,105,205 auf, das um eine im wesentlichen horizontal und parallel zur Fahrzeuglängsachse verlaufende Schwenkachse 6,106,206 schwenkbar ist, wobei die Schwenkachse 6,106,206 ihre Lage während des Verschwenkens des Riegelorgans 5,105,205 bezüglich diesem nicht ändert, also gegenüber diesem, wie auch gegenüber dem Lagerungsteil 7,107,207, ortsfest angeordnet ist. Dabei ist zwischen dem Hakenteil 5,105,205 und dem Antriebsgestänge 3,103,203 ein kraftumlenkender Übertragungshebel 8,108,208 angeordnet, über den die im wesentlichen der Fahrzeugquerachse folgende Zug- oder Schubbewegung des Antriebsgestänges 3,103,203 in eine Schwenkbewegung des Hakenteils 5,105,205 umgesetzt wird.

Der Übertragungshebel 8,108,208 ist als gegenüber dem Hakenteil 5,105,205 gesondertes Bauteil ausgebildet und entweder fest mit der Schwenkachse 6,206 verbunden oder mit Abstand zur Schwenkachse 106 an dem Hakenteil 105 angelenkt und liegt in einer zur Schwenkebene des Riegelorgans 5,105,205 parallelen Ebene.

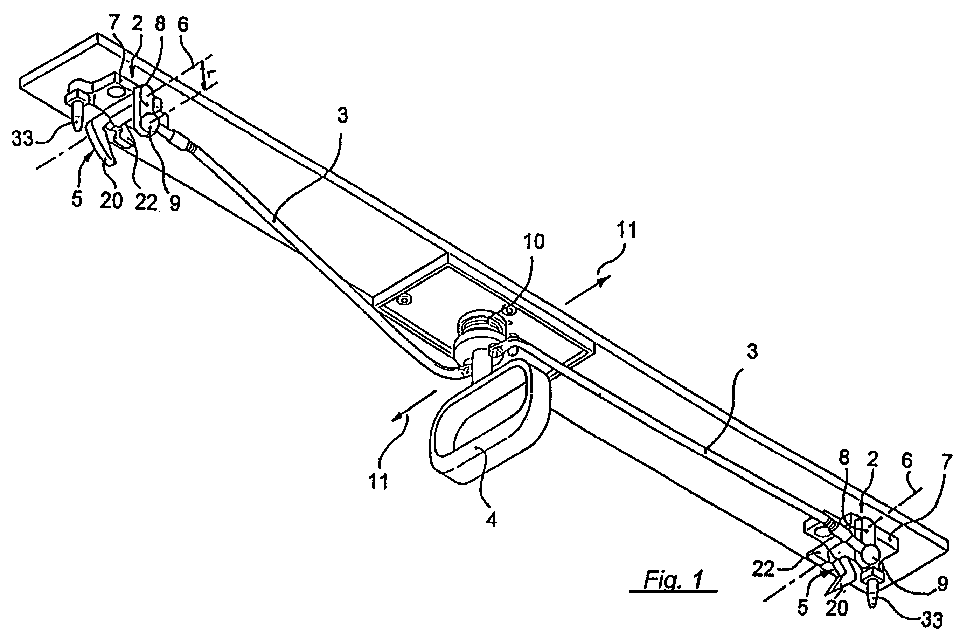

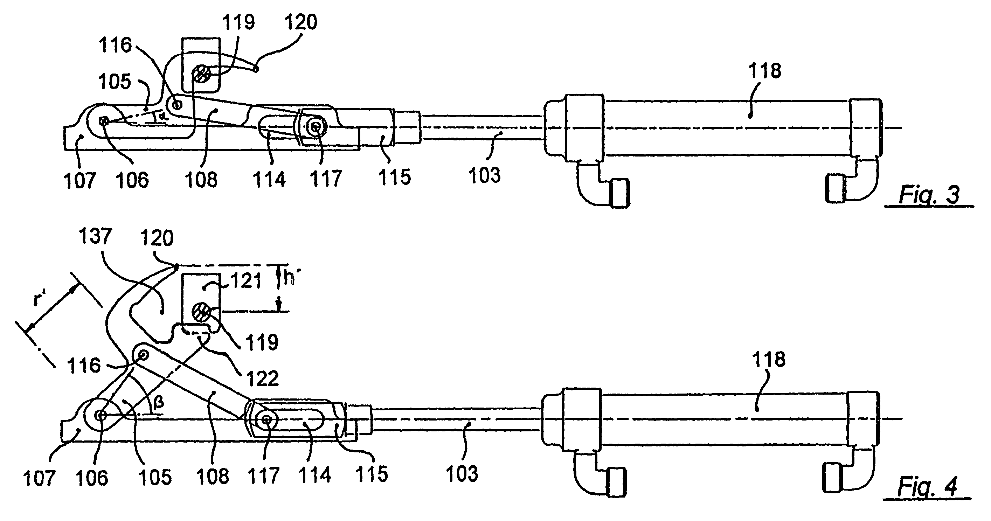

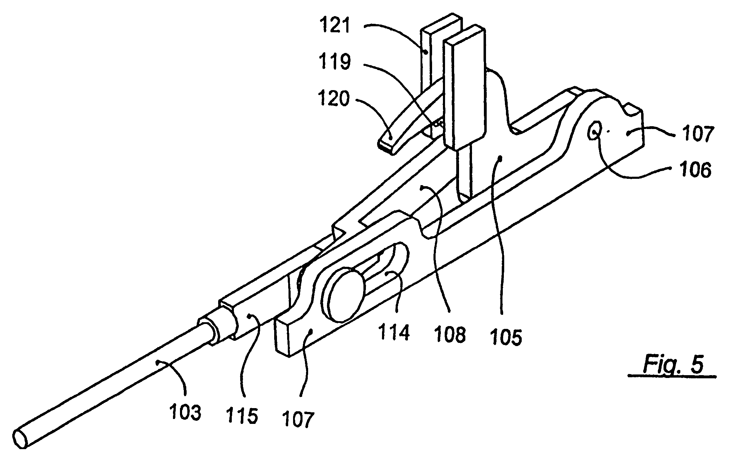

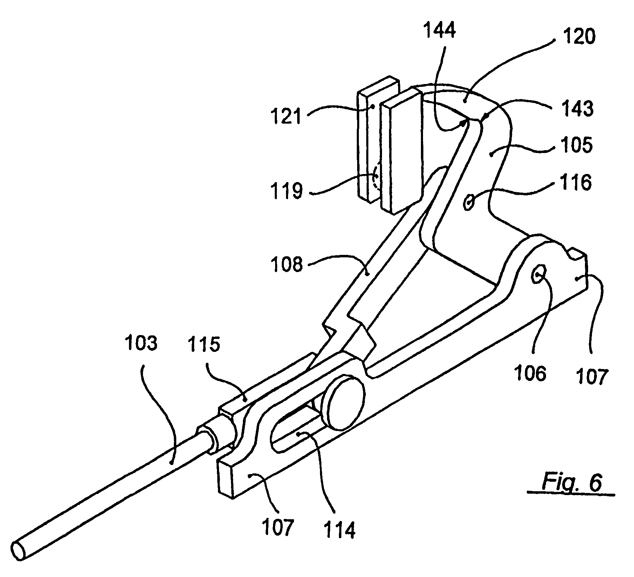

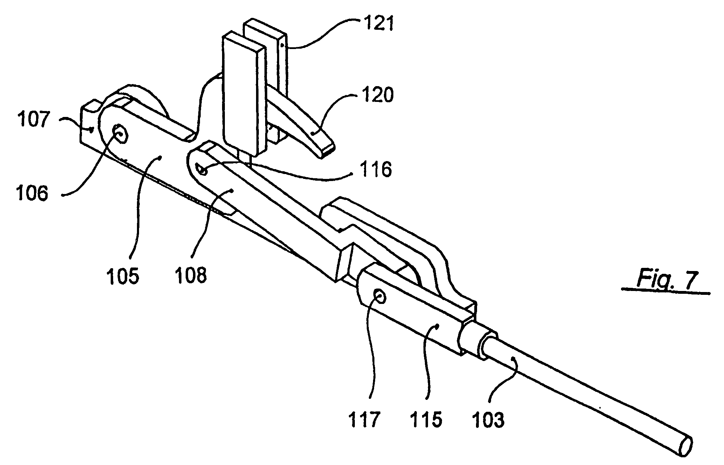

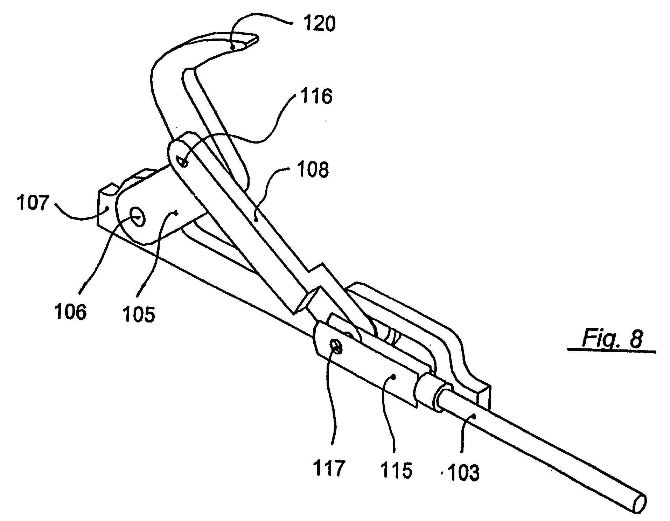

In jedem Fall ist durch den Übertragungshebel 8,108,208 eine Erleichterung des Verschwenkens des Hakenteils 5,105,205 dadurch erreicht, daß für das hierfür aufzubringende Drehmoment ein Hebelweg r,r',r'' ausgebildet ist, der hinreichend groß ist, um die Kraft zur Aufbringung des Drehmomentes gering halten zu können.
a) Im ersten Ausführungsbeispiel ist der Übertragungshebel 8 entweder einstückig mit dem die Schwenkachse 6 bildenden Bauteil ausgebildet, oder er ist mit diesem zumindest fest verbunden, ebenso wie das Riegelorgan 5 fest mit der Schwenkachse 6 verbunden ist. Der Übertragungshebel 8 weist dabei radial auswärts von der Schwenkachse 6 und ist an seinem der Schwenkachse 6 abgewandten Ende mit dem Antriebsgestänge 3 verbunden. Das Antriebsgestänge 3 greift dabei über ein Kugelgelenk 9 an dem Übertragungshebel 8 an.
   Diese Anlenkung über ein Kugelgelenk 9 weist den besonderen Vorteil auf, daß die Abweichungen der Bewegung des Antriebsgestänges 3 von einer gradlinigen Bewegung durch dieses Kugelgelenk 9 abgefangen werden können, ohne zu einem Verkanten der Schwenkachse 6 zu führen. Insbesondere bei einer Anordnung des Antriebsgestänges 3 an dem zentralen Betätigungsorgan 4 gemäß Fig. 1, bei dem eine gegen eine Spiralfeder 10 ausgeführte Drehung des Betätigungsorgans 4 um eine vertikale Achse 66 das Antriebsgestänge 3 betätigt, findet im ersten Sektor der Drehung des Betätigungsorgans 4 in erster Linie eine Bewegung des Antriebsgestänges 3 in Richtung der Pfeile 11, also der Fahrzeuglängsachse folgend, statt. Die auswärts gerichtete Schubbewegung des Antriebsgestänges 3 zum Öffnen der Riegelorgane 5 gewinnt erst mit zunehmendem Drehwinkel des Betätigungsorganes 4 und bleibt stets von einem Restanteil der Drehbewegung überlagert. Durch den Einsatz des Kugelgelenkes 9 kann die Drehachse 6 in dem Lagerungsteil 7 mit geringstem Spiel eingesetzt werden, da die Bewegung des Übertragungshebels 8 bereits vollständig in bzw. parallel zu der Schwenkebene des Hakenteils 5 liegt, so daß ein Verkanten der Schwenkachse 6 bei Betätigung des Übertragungshebels 8 ausgeschlossen ist.
   Im Ausführungsbeispiel sind die Verschlußelemente 2 sowie das Antriebsgestänge 3 und das Betätigungsorgan 4 im Cabriolet-Verdeck 12 angeordnet, wohingegen sich die Widerlager 19 im Windschutzscheibenrahmen 13 befinden. Eine Umkehrung dieser Anordnung ist grundsätzlich möglich, weist jedoch bei Handbedienung das Problem auf, daß das als Handgriff ausgebildete Betätigungsorgan 4 sehr viel Platz beansprucht und daher besser im Verdeck 12 unterzubringen ist, wo es nicht in Kollision mit den Sonnenblenden oder dem Rückspiegel gerät.
b) Im zweiten Ausführungsbeispiel ist zwischen dem Riegelorgan 105 und dem Antriebsgestänge 103 eine Kulissenführung 114 ausgebildet, in der der die Kraft umlenkende Übertragungshebel 108 geführt ist. Der Übertragungshebel 108 verbindet dabei das Endstück 115 des Antriebsgestänges 103 mit dem als Hakenteil ausgebildeten Riegelorgan 105 und ist an diesem an einer Anlenkachse 116 angelenkt, wobei die Anlenkachse 116 in einem Abstand r' zur Schwenkachse 106 des Riegelorgans 105 angeordnet ist. Das der Anlenkachse 116 abgewandte Ende des Übertragungshebels 108 bildet eine Führungsachse 117 aus, die in der Kulissenführung 114 geführt ist.
   Um auch aus der Verschlußstellung des Hakenteils 105 heraus (Fig. 3) einen Hebelarm nutzen zu können, ist die gedachte Verbindungslinie zwischen der Schwenkachse 106 und der Anlenkachse 116 gegenüber der gedachten Verbindungslinie zwischen der Schwenkachse 106 und der Führungsachse 117 um einen Öffnungswinkel α versetzt, der gleichsinnig zu dem Schwenkwinkel β des Riegelorgans 105 gelegen ist.
   Die Kulissenführung 114 ist dabei im wesentlichen parallel - oder in einem spitzen Öffnungswinkel entsprechend dem Verlauf des Windschutzscheibenrahmens 13 - zur Fahrzeugquerachse, und damit rechtwinklig zur Schwenkachse 106, ausgebildet, wobei das auswärts gerichtete Endstück 115 des Antriebsgestänges 103 in dieser Kulissenführung 114 geführt ist und somit eine auswärts gerichtete Zug- oder Schubbewegung senkrecht zur Schwenkachse 106 des Riegelorgans 105 vollführt.
   Jegliches Verkanten wird vermieden, wenn jedem Verschlußelement 102 ein einzelner Antrieb 118 zugeordnet ist, beispielsweise ein Hydraulikzylinder. In der Regel wird jedoch auch hier ein zentrales Betätigungsorgan 4 verwendet, so daß ein gewisses Spiel in der Kulissenführung 114 vorhanden sein muß, um ein seitliches Verkanten des Antriebsgestänges 103 darin zu verhindern. Um von der geschlossenen Position (Fig. 3, Fig. 5, Fig. 7) in die offene Position (Fig. 4, Fig. 6, Fig. 8) zu gelangen, muß das Riegelorgan 5 nur um einen Schwenkwinkel β, der deutlich kleiner ist als 90°, verschwenkt werden, wobei das Hakenende 120 zum Lösen der Verbindung mit dem Widerlager 119 keinen hohen Translationsweg h' in vertikaler Richtung aufweist, so daß die Bauhöhe des das Widerlager 119 aufnehmenden Aufnahmeteils 121 gering gehalten werden kann. Dieses kann zusätzlich unterstützt werden, wenn an dem Riegelorgan 105 ein Distanznocken 122 angeformt ist, wie weiter unten näher beschrieben und in der Fig. 4 eingezeichnet ist.
c) In einem dritten Ausführungsbeispiel ist der Übertragungshebel 208 analog zum Übertragungshebel 8 im ersten Ausführungsbeispiel starr an dem Riegelorgan 205 angeordnet und anderenends mit dem Antriebsgestänge 203 gelenkig verbunden. Diese Anlenkung des Antriebsgestänges 203 an dem Übertragungshebel 208 kann ebenfalls, wie im ersten Ausführungsbeispiel, über ein Kugelgelenk 209 erfolgen, um damit seitwärts gerichtete Komponenten der Bewegung des Antriebsgestänges 203 zu kompensieren.

Im Unterschied zum ersten Ausführungsbeispiel ist jedoch das Riegelorgan 205 hier in einer Kulissenführung 214 geführt, wobei die Kulissenführung 214 einen Endbereich 224 ausbildet, in dem ein Verschwenken des Riegelorganes 5 um die Schwenkachse 206 möglich ist, wohingegen in dem sonstigen Bereich der Kulissenführung 214 das Riegelorgan derartig ausgeführt ist, daß nur eine reine Translationsbewegung in der Kulissenführung 214 möglich ist, eine Schwenkbewegung dabei verhindert wird.

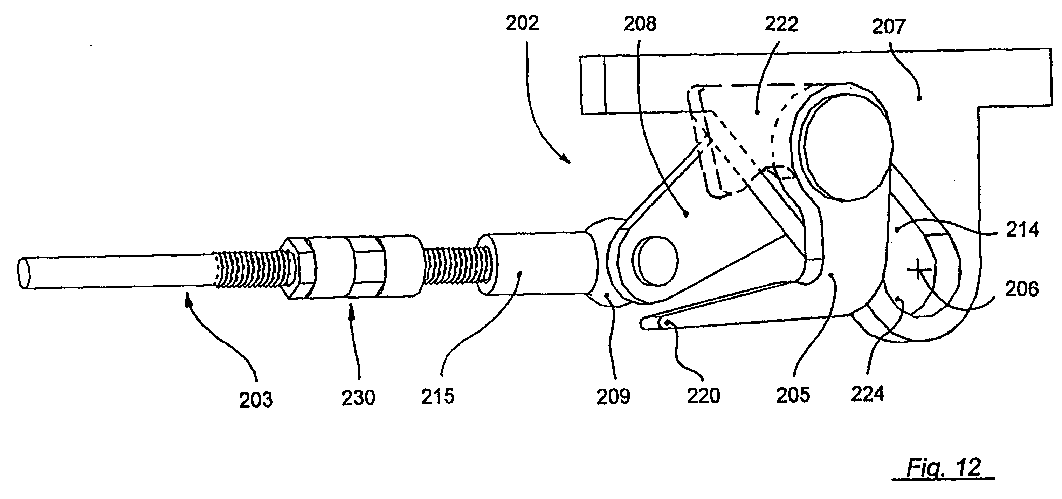

Dazu ist in Schwenkposition (Fig. 11) des Riegelorgans 205 dessen Schwenkachse 206 von einem in Längsrichtung zumindest einseitig abgeflachten Achskörper 225 gebildet, der in der Kulissenführung 214 derartig geführt ist, daß allein im Bereich der Aufweitung 224 der Achskörper 225, der entweder einstückig mit dem Riegelorgan 205 ausgebildet oder zumindest mit diesem fest verbunden ist, in der Führung 214 geschwenkt werden kann, wohingegen bis auf diesen Aufweitungsbereich 224 die gesamte Kulissenführung 214 eine den Achskörper 225 zwangsführende und sein Verschwenken hindernde Führung ausbildet. Der Durchmesser der Aufweitung 224, die eine im wesentlichen runde Umrißgestalt aufweist, ist dabei mindestens so groß wie der Durchmesser des Achskörpers 225 in nicht abgeflachten Bereichen.

Der Bewegungsablauf zum Öffnen eines Cabriolet-Verdeckes 212, an dem das Lagerungsteil 207 angeordnet sein kann, ist dabei so ausgeführt, daß zunächst der abgeflachte Achskörper in einer rein translatorischen Bewegung von seiner oberen Position in der Kulissenführung 214 durch eine Schub- oder Zugbewegung des Antriebsgestänges 203 parallel verschoben werden, wobei diese Verschiebung in der Kulissenführung 214 seitwärts und abwärts gerichtet ist. Dabei bewegt sich das Hakenteil 205 derart gegenüber dem Widerlager 219, daß dieses seitwärts auf dem Hakenende 220 abgleitet, wobei die Eigenspannung des Cabriolet-Verdeckes 212 für die Anlage des Widerlagers 219 an dem Hakenende 220 in dieser Phase der Bewegung sorgt, da bei Lösen des Verschlußelementes 202 die Eigenspannung automatisch eine aufwärts gerichtete Bewegung des Endes des Cabriolet-Verdeckes 212 bewirkt.

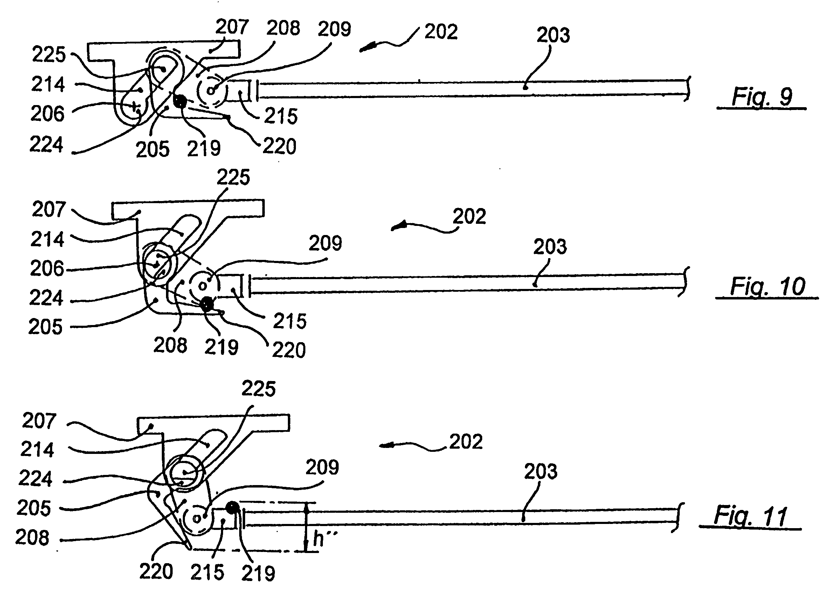

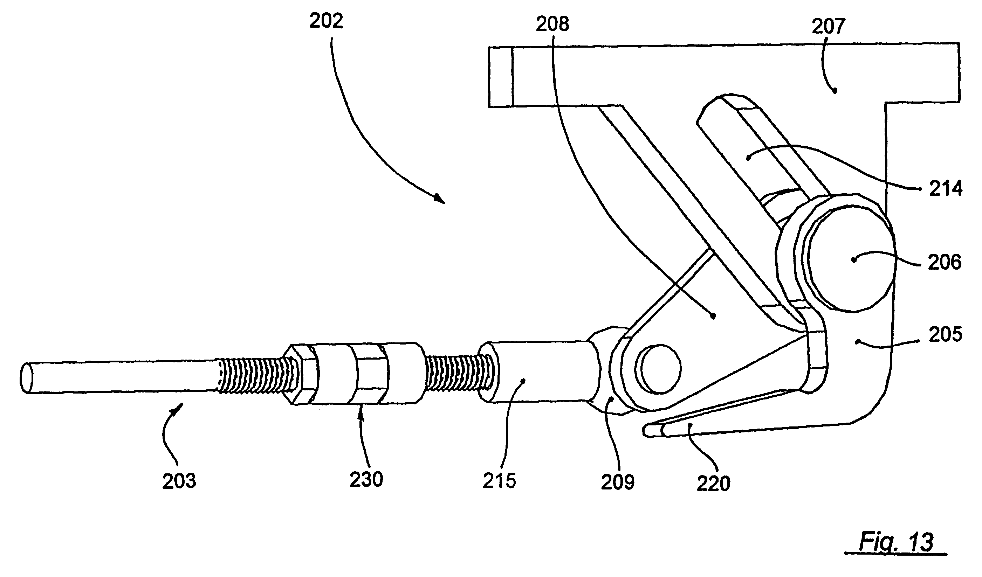

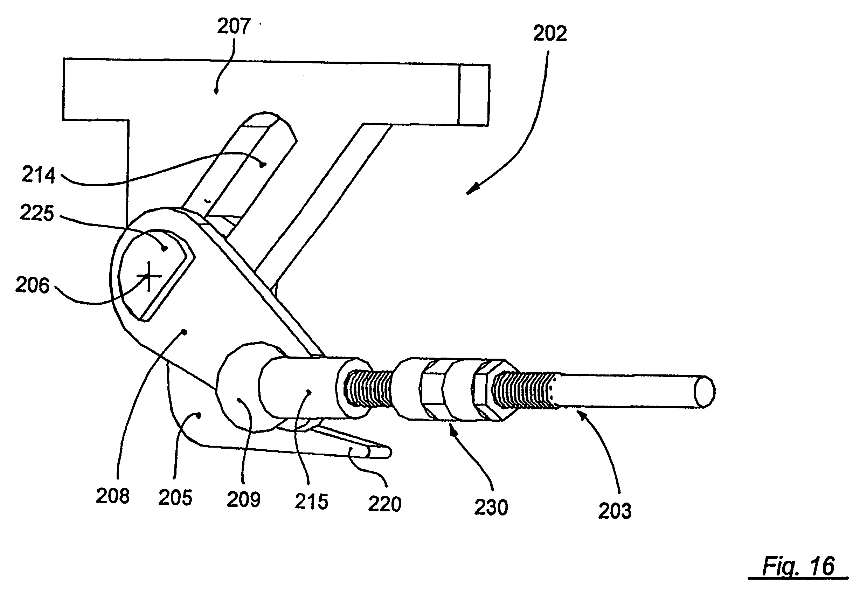

Nach Durchlaufen der Kulissenführung 214 gelangt der Achskörper 225 in den aufgeweiteten Bereich 224 (Fig. 10, Fig. 13, Fig. 16), in dem er schwenkbar ist. Eine weitere auswärts gerichtete Druckbewegung des Antriebsgestänges 203 führt dann also nicht zu einer Weiterverschiebung des Achskörpers 225 - und damit des Riegelorgans 205 - in der Kulissenführung 214, sondern verschwenkt das Riegelorgan 205, das mit seinem Achskörper 225 in den aufgeweiteten Bereich 224 eingreift und um die Schwenkachse 206 schwenkbar ist. Zur Bewirkung dieser Schwenkbewegung des Riegelorgans 205 ist das Antriebsgestänge 203 analog wie im ersten Ausführungsbeispiel an dem Übertragungshebel 208 angelenkt, wofür wieder vorteilhaft ein Kugelgelenk 209 Verwendung findet.

Auch hier ist aufgrund der Überlagerung der Translations- und Rotationsbewegung des Riegelorgans 205 die Eindringtiefe h" des Hakenteils 205 in das das Widerlager 219 tragende Aufnahmeteil 221 gering, so daß dessen Bauhöhe klein gehalten werden kann. Um ein zu tiefes Eindringen des Hakenendes 220 in dieses Aufnahmeteil 221 zu vermeiden, kann auch hier, wie in Fig. 12 gezeichnet, zusätzlich ein unten näher beschriebener Distanznocken 222 vorgesehen sein.

Bei allen Ausführungsbeispielen ist zum Ausgleichen von Fertigungstoleranzen besonders vorteilhaft die Länge des Antriebsgestänges 3,103,203 verstellbar.

Hierzu ist am Endstück 15,115,215 des als Zug-Druck-Stange ausgebildeten Antriebsgestänges 3,103,203 ein Längenverstellmechanismus 30,130,230 angeordnet. Dieser weist eine Verbindungsmuffe 31 auf, in deren Innengewinde, das als Linksgewinde ausgebildet ist, die Schubstange 3 über ein Außengewinde aufgenommen ist. Die Verbindungsmuffe 31 ist insgesamt in dem mit der Kugelpfanne des Kugelgelenks 9 verbundenen und ebenfalls mit einem Innengewinde, allerdings einem Rechtsgwinde, versehenen Endstück 15 aufgenommen, wobei die relative Lage der Verbindungsmuffe 31 zu dem Endstück 15 über die Kontermutter 32 festlegbar ist.

Über einen solchen oder ähnlichen Längenverstellmechanismus 30,130,230 können Fertigungstoleranzen in der Weise ausgeglichen werden, daß immer eine Verschwenkbarkeit der Riegelorgane 5,105,205 zwischen ihren Extrempositionen gesichert ist. Die zum Halten des Cabriolet-Verdeckes 12 auf dem Windschutzscheibenrahmen 13 erforderliche Spannung wird daher immer erreicht.

Neben den Verschlußelementen 2,102,202 können zusätzliche Zentrierungsmittel 33 an dem Cabriolet-Verdeck 12 bzw. dem Windschutzscheibenrahmen 13 angeordnet sein, die bei der hier gezeigten Anordnung der Schwenkachsen vorzugsweise die Zentrierung des Cabriolet-Verdeckes 12 entlang der Fahrzeuglängsachse sichern sollen, da das als umgriffener Riegel ausgebildete Widerlager 19,119,219 eine gewisse Längsausdehnung aufweist, die größer ist als die Breite des Riegelorgans 5,105,205, so daß dieses entlang dem Widerlager 19,119,219 parallel zur Fahrzeuglängsachse mit gewissem Spiel behaftet ist. Durch geeignete Zentrierungsmittel 33, beispielsweise Zapfen, die in als Kegel gebildete Einlaufkanäle 34 im Bereich des Aufnahmeteils 21,121,221 des Widerlagers 19,119,219 eingreifen, läßt sich diese Bewegung des Cabriolet-Verdeckes 12 entlang der Längsachse des Fahrzeuges verhindern.

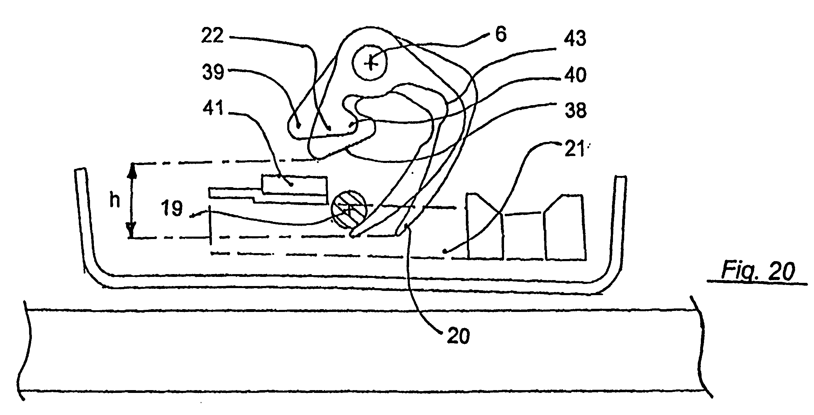

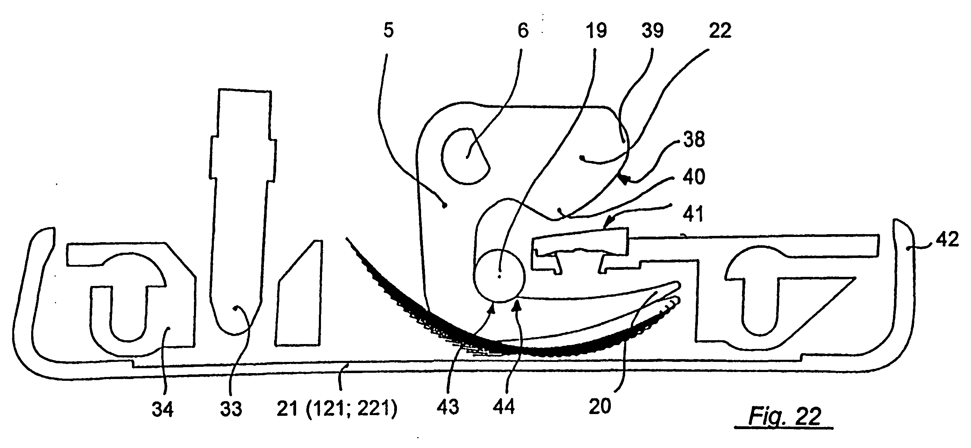

Die Fig. 20 bis 22 zeigen die Ausbildung einer Aufnahmeeinheit 21 eines Widerlagers 19, das in die Aufnahmeeinheit 21 eingebaut ist, so daß ein das Widerlager 19 umgreifendes Hakenteil 5,105,205 in die Aufnahmeeinheit 21,121,221 mit seinem Hakenende 20,120,220 eindringt und in dieser derart verschwenkt wird, daß in Verschlußstellung das Widerlager 19,119,219 von dem Hakenende 20,120,220 untergriffen ist, wodurch das Cabriolet-Verdeck 12 eine vertikal abwärts gerichtete Zugkraft erfährt.

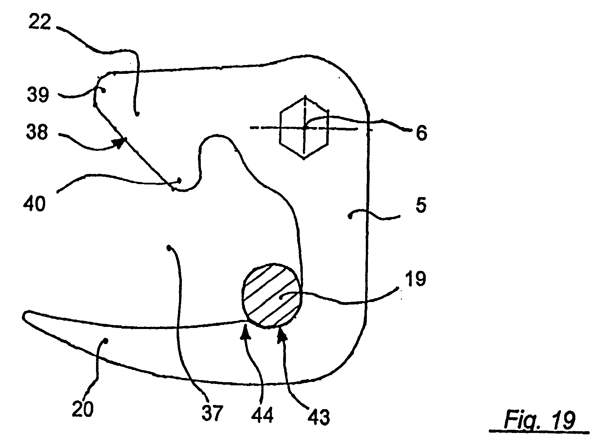

Für verschiedenste Arten von Riegelorganen 5,105,205, auch solche, die beispielsweise um eine Fahrzeugquerachse schwenken oder als Viergelenk ausgebildet sind, wobei die Anzahl der Riegelorgane 5,105,205 variabel ist, ist erfindungsgemäß ein Distanznocken 22,122,222 ausgebildet, der zur Begrenzung der Eindringtiefe des Hakenteils 20,120,220 in das das Widerlager 19,119,219 tragende Aufnahmeteil 21,121,221 dient. Der Distanznocken 22,122,222 kann dabei sowohl an dem Aufnahmeteil 21,121,221 als auch an dem Hakenteil 5,105,205 angeordnet sein. Vorzugsweise ist der Distanznocken 22, wie in Fig. 19 gezeichnet, einstückig mit dem Hakenteil 5 ausgebildet. Zwischen dem Distanznocken 22 und dem das Widerlager 19 in Verschlußstellung umgreifenden Hakenende 20 bildet sich ein Einlaufkanal 37 für das Widerlager 19 aus.

Der Distanznocken 22 bildet eine Ablaufkurve 38 aus, die gekennzeichnet ist durch einen hervorstehenden Spitzenbereich 39, der bei Aufprall des maximal geöffneten Riegelorgans 5 auf die Aufprallfläche 41 des Widerlager 21 trifft und somit ein tieferes Eindringen, als es der Differenzhöhe h zwischen der Aufprallspitze 39 und dem Hakenende 20 entspricht, in das Aufnahmeteil 21 verhindert. Diese Höhe h bei maximal aufgeschwenktem Riegelorgan 5 bestimmt daher die notwendige Bauhöhe des Aufnahmeteils 21. Dies verdeutlicht, daß die Ausbildung eines Distanznockens die Höhe des Aufnahmeteils 21 für das Widerlager 19 deutlich zu senken in der Lage ist.

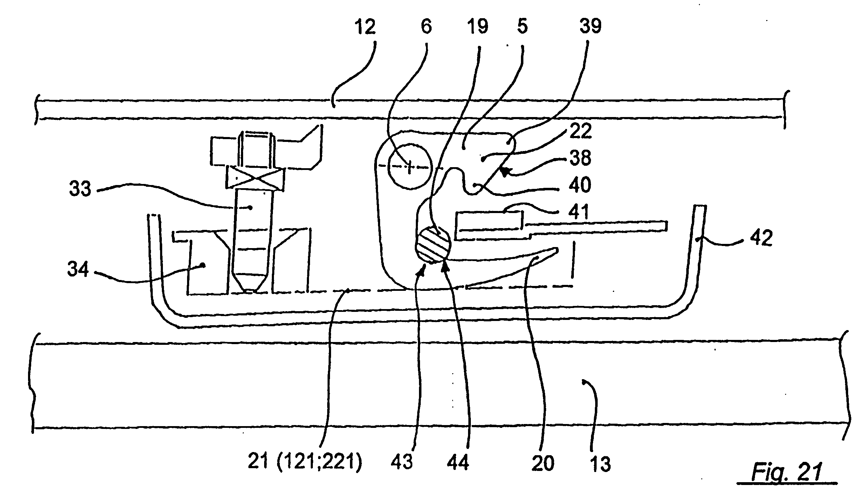

Bei Weitereinschwenken des Riegelorgans 5 kann durch die Zugkraft durch die Eigenspannung des Cabriolet-Verdeckes 12 das Widerlager 19 auf dem Hakenende 20 abrollen oder -gleiten, jedoch auch bei zusätzlich ausgeübter, vertikal nach oben gerichteter Zugkraft auf das Cabriolet-Verdeck 12 ist ein zu tiefes Eindringen der Hakenenden 20 in das Aufnahmeteil 21 dadurch vermieden, daß der Distanznocken 22 eine Abrollkurve 38 ausbildet, die je nach Schwenkwinkel stets ein Unterschreiten der maximalen Eindringtiefe h des Hakenendes 20 sicherstellt und am Ende des Einschwenkens, in Verschlußstellung des Hakenteils 5, hinsichtlich seiner Abstandswirkung aufgehoben ist, so lange nicht eine zusätzliche nach unten gerichtete Kraft auf das Cabriolet-Verdeck 12 ausgeübt wird. Dieses zeigt Fig. 21, aus der deutlich wird, daß in Verschlußstellung der Distanznocken 22 zu der Aufprallfläche 41 beabstandet ist und durch die Zugkraft des Cabriolet-Verdeckes 12 durch dessen Eigenspannung das Widerlager 19 an dem Hakenende 20 anliegt.

Wird aus dieser Position heraus eine vertikal abwärts gerichtete Kraft auf das Cabriolet-Verdeck 12 ausgeübt, so schlägt die Spitze 40 des Distanznockens 22 auf der Aufprallfläche 41 auf und begrenzt auch in diesem Zustand die Eindringtiefe des Hakenendes 20 in das Aufnahmeteil 21, so daß Hakenende 20 bei abrupter Abwärtsbewegung nicht an der Verkleidung 42 des Aufnahmeteils 21 anschlägt.

Das Hakenende 20,120,220 nimmt in Verschlußstellung eine im wesentlichen waagerechte Stellung ein und sichert seine Lage gegenüber dem Widerlager 19,119,219 durch eine Aufnahmeaussparung 43,143,243 in die das Widerlager 19,119,219 bei vollständigem Einschwenken des Verschlußhakens 5,105,205 gleitet. Dies Aufnahmeaussparung 43,143,243 ist von einem dieser gegenüber erhöhten Randbereich 44,144,244 begrenzt, so daß ein selbständiges Herausbewegen des Widerlagers 19 aus der Verschlußstellung mit einem großen Kraftaufwand verbunden ist, da hierzu nicht alleine ein seitliches Verschwenken des Riegelorgans 5,105,205 erforderlich ist, sondern zusätzlich ein vertikales Abwärtsziehen, um die Kante 44,144,244 zu überwinden.

Dieses Abwärtsbewegen des Cabriolet-Verdeckes 12 erfolgt jedoch gegen dessen Zugkraft aus seiner Eigenspannung, so daß der Kraftaufwand hierfür erheblich ist und somit ein unbeabsichtigtes Öffnen des Cabriolet-Verdeckes 12 zuverlässig vermieden ist.

Eine solche Aufnahmeaussparung 43,143,243 ist an beliebigen Arten von Riegelorganen anbringbar, wodurch die Verschlußstellung in jedem Fall eine Arretierung erfährt.

Die Ausbildung eines Riegelorgans 5 mit einem seine Eindringtiefe h in ein Aufnahmeteil 21 begrenzenden Distanznocken 22 ist im Ausführungsbeispiel an Hakenteilen 5 ausgebildet, die um eine im wesentlichen parallel zur Fahrzeuglängsachse verlaufende horizontale Schwenkachse schwenkbar sind. Auch andere Anordnungen von Riegelorganen 5 können mit einem solchen Distanznocken versehen sein, in jedem Fall ergibt sich bei einer sehr kleinen Bauhöhe des Aufnahmeteils 21 großer Fangweg für das Riegelorgan 5 über dessen Hakenende 20, so daß ein zuverlässiges Greifen und Niederholen des Cabriolet-Verdeckes 12 trotz der sehr geringen Eindringtiefe der Hakenenden 20 ermöglicht ist.

Das Betätigungsorgan 4 zur Betätigung der seitlich an dem Cabriolet-Verdeck 12 angeordneten Verschlußelemente 2,102,202 weist ein Verriegelungselement 50 auf, das den Handgriff 4 in einer zumindest die Verschlußelemente 2 in Verschlußstellung haltenden Ausgangslage blockiert. Dabei ist der Handgriff 52 um eine horizontale Achse 51 verschwenkbar, nimmt in Ausgangsposition eine im wesentlichen horizontale, zum Fahrzeugheck gerichtete Lage ein, wobei das Aufschwenken des Handgriffs 4 durch das Verriegelungselement 50 blockiert ist.

Das Verriegelungselement 50 weist eine ein Widerlager ausbildende Anformung 53 auf, die eine Hinterschneidung 54 des Betätigungsgriffes 52 untergreift und daher das Verschwenken des Betätigungsgriffes 52 verhindert. Um dieses Untergreifen zu sichern, ist das Verriegelungselement 50 über eine Feder 55 derart vorgespannt, daß es in Eingriffsstellung mit der Hinterschneidung 54 gedrückt wird.

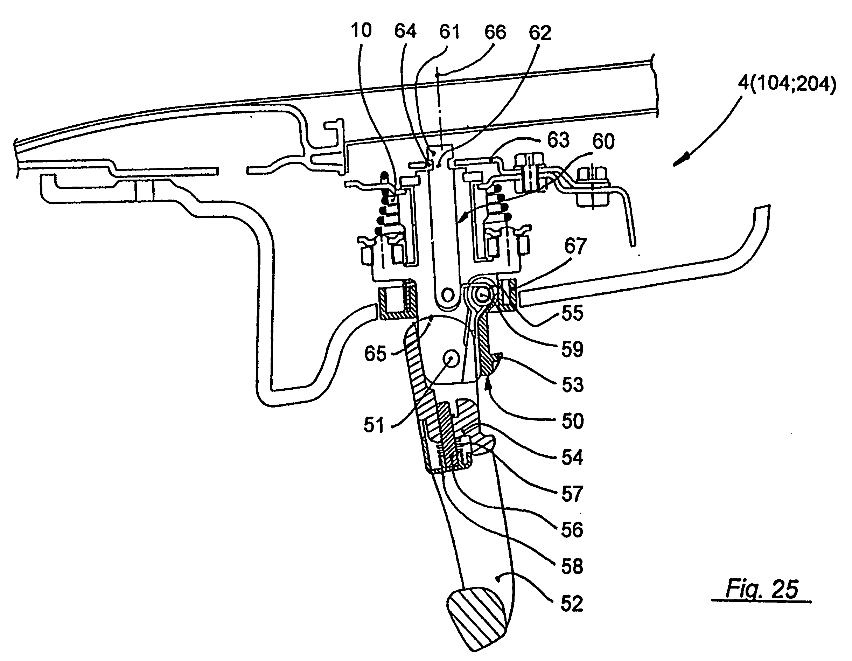

Um das Verriegelungselement 50 außer Eingriff mit der Hinterschneidung 54 des Handgriffes 52 zu bewegen, ist ein Betätigungselement 56 an dem Handgriff 52 angeordnet, das über eine Feder 57 in dem Handgriff 52 gelagert ist und in seinem in Fahrzeuglängsrichtung nach hinten weisenden Ende eine Drucktaste 58 aufweist und anderenends in Eingriff mit dem Verriegelungselement 50 steht. Bei Eindrücken des Betätigungselementes 56 entgegen der Federkraft 57 mittels eines Drucks auf die Drucktaste 58, die im wesentlichen in Fahrtrichtung des Fahrzeugs zu drücken ist, wird das Betätigungselement derart gegen das Verriegelungselement 50 gedrückt, daß dieses gegen die Kraft seiner Feder 55 nach vorne um eine Achse 59 verschwenkt wird, wodurch das Widerlager 53 außer Eingriff mit der Hinterschneidung 54 des Handgriffes 52 bewegt und ein Abwärtsschwenken des Handgriffes 52 dadurch ermöglicht wird (Fig. 25).

Da die Bewegung des Antriebsgestänges 3,103,203 der oben beschriebenen Ausführungsbeispiele ein Verschwenken des Handgriffes 52 um eine vertikale Achse erfordert, ist zusätzlich sicherzustellen, daß dieses Verschwenken des Handgriffes 52 um die vertikale Achse erst bei voll ausgeschwenktem Handgriff 52 um die horizontale Achse 51 erfolgen kann. Dazu ist ein die Drehbewegung des Handgriffes 52 um die vertikale Achse über einen Teilbereich des Schwenkwinkels um die horizontale Achse 51 sperrendes Blockierungselement 60 vorgesehen.

Dieses Blockierungselement 60 ist als vertikal beweglicher Stift ausgebildet, der in seinem oberen Bereich ein bezüglich der vertikalen Schwenkachse nicht isotropes, beispielsweise in Draufsicht rechteckiges, Endstück 61 ausbildet, an das sich vertikal abwärts gerichtet ein in Draufsicht kreisrundes und damit bezüglich einer Drehung um die vertikale Achse isotropes Halsstück 62 anschließt. Dieser Stift ist zum Eingriff in ein Widerlager 63 vorgesehen, wobei das Widerlager eine an die Umrißgestalt des Endstücks angepaßte Ausnehmung 64 aufweist, in die das Endstück 61 des Stiftes bei teilweise ausgeschwenktem Handgriff 52 eingreift. Durch die Übereinstimmung der Form des Endstückes 61 und der Ausnehmung 64 ist ein Verdrehen der beiden Teile gegeneinander unmöglich. Das Widerlager 63 ist fest mit dem Cabriolet-Verdeck bzw. dem Windschutzscheibenrahmen 13 verbunden.

Erst wenn der Stift 60 seine höchste vertikale Position erreicht, greift das Halsstück 62 in die Ausnehmung 64 ein, in dem es frei um die vertikale Achse 66 drehbar ist, so daß ein Verschwenken des Betätigungsorgans 4 um die vertikale Achse möglich ist. Zur Steuerung der vertikalen Bewegung des das Blockierungsmittel 60 ausbildenden Stiftes wird dieser von einem Teilbereich 65 des Handgriffes 52 oder einer Anformung nach Art eines Nockens gesteuert, so daß in Abhängigkeit des Schwenkwinkels des Handgriffs 52 um die horizontale Achse 51 die Vertikalbewegung des Stiftes 60 gesteuert werden kann und dieser bei maximal abwärts geschwenktem Handgriff 52 seine obere Vertikalposition erreicht. Vorzugsweise ist dazu das vordere Ende 65 des Handgriffes 52 als Führungsbahn für den Stift 60 ausgebildet, der von dieser Bahn 65 aufwärts verschoben wird und bei voll ausgeschwenktem Handgriff 52 seine obere Vertikalposition erreicht (Fig. 25).

Dadurch ist sowohl durch das Verriegelungselement 50 das unbeabsichtigte oder unbefugte Verschwenken des Handgriffes 52 blockiert als auch durch das Blockierungsmittels 60 ein Verschwenken des Handgriffes um die vertikale Achse 66, und damit ein Betätigen der Verschlußelemente 2 außerhalb der voll aufgeschwenkten Position des Handgriffes 52, unterbunden. Diese doppelte Sicherung bewirkt eine Komfortsteigerung, da zum Öffnen der Verschlußvorrichtung der Handgriff 52 nicht über einen Totpunkt hinweg geschwenkt werden muß oder gegen eine starke Federkraft angearbeitet werden muß, sondern das Lösen des Verriegelungselementes 50, was mit leichten Daumendruck geschehen kann, ein einfaches Aufschwenken des Handgriffes 52 um die horizontale Achse 51 ermöglicht, wobei das anschließende Verschwenken um die vertikale Ache 66 durch das Sicherungsmittel 60 ohne die Gefahr des Verkantens ausgeführt werden kann. Auch ein Zurückklappen des Handgriffs 52 mit der Gefahr des Einklemmens der Finger ist dadurch weitestgehend vermieden.

Zusätzlich ist das Zurückklappen des Handgriffs 52 über eine federnd gelagerte und vertikal verschiebliche Platte 67 abgefedert, die in horizontaler Lage des Handgriffs 52 flächig an diesem anliegt.

## Patentansprüche

1. Verschlußvorrichtung für ein an einem Karosserierahmenteil (13) lösbar festlegbares Cabriolet-Verdeck (12) von insbesondere Kraftfahrzeugen, mit zumindest einem dem Cabriolet-Verdeck (12) bzw. dem Karosserierahmenteil (13) zugeordneten Verschlußelement (2;102;202) bzw. Widerlager (19;119;219), wobei das Verschlußelement (2;102;202) zumindest ein mit dem Widerlager (19;119;219) in Eingriffs- bzw. Außereingriffsstellung bewegbares Riegelorgan (5;105;205) umfaßt und das Riegelorgan (5;105;205) als schwenkbares Hakenteil ausgebildet ist, wobei zur Begrenzung der Eindringtiefe des Hakenteils (20;120;220) in ein das Widerlager (19;119;219) tragendes Aufnahmeteil (21;121;221) ein Distanznocken (22;122;222) vorgesehen ist, der in einem Teilbereich des Schwenkwinkels des Hakenteils (5;105;205) zur Wirkung kommt, wobei ein das Widerlager oder das Hakenteil berührender Distanznocken-Bereich unterschiedliche Abstände zur Drehachse des Hakenteils aufweist,
**dadurch gekennzeichnet, daß** der Distanznocken (22;122;222) an dem Hakenteil (5;105;205) angeformt ist.

2. Verschlußvorrichtung nach Anspruch 1, **dadurch gekennzeichnet, daß** der Distanznocken (22;122;222) und das in Verschlußstellung das Widerlager (19;119;219) umgreifende Hakenende (20;120;220) zwischen sich eine Einlauföffnung (37;137;237) für das Widerlager (19;119;219) ausbilden.

3. Verschlußvorrichtung nach einem oder mehreren der Ansprüche 1 bis 2, **dadurch gekennzeichnet, daß** in Verschlußstellung des Hakenteils (5;105;205) die Abstandswirkung des Distanznockens (22;122;222) aufgehoben ist.

4. Verschlußvorrichtung nach einem oder mehreren der Ansprüche 1 bis 3, **dadurch gekennzeichnet, daß** die Schwenkachse (6;106;206) des Hakenteils (5;105;205) parallel zur Fahrzeuglängsachse verläuft und das oder die Hakenteile (5;105;205) über ein zentrales Betätigungsorgan (4;104;204) betätigbar ist oder sind.

5. Verschlußvorrichtung nach einem oder mehreren der Ansprüche 1 bis 4, **dadurch gekennzeichnet, daß** in Verschlußstellung das das Widerlager (19;119;219) umgreifende Hakenende (20;120;220) eine im wesentlichen horizontale Stellung einnimmt und eine Aufnahmeaussparung (43;143;243) zur arretierenden Anlage an das Widerlager (19;119;219) aufweist.

## Claims

1. Closure device for a convertible-vehicle soft top (12) of, in particular, motor vehicles, which soft top (12) is able to be detachably fastened to a bodywork frame-part (13), having at least one closure member (2, 102, 202) and abutment (19, 119, 219) which are respectively associated with the convertible-vehicle soft top (12) and the bodywork frame-part (13), the closure member (2, 102, 202) comprising at least one locking member (5, 105, 205) able to be moved to positions in which it is engaged with or disengaged from the abutment (19, 119, 219), and the locking member (5, 105, 205) being in the form of a pivotable hooked part, a spacer cam (22, 122, 222) being provided to limit the depth of penetration of the hooked part (20, 120, 22) into a receiving part (21, 121, 221) which carries the abutment (19, 119, 219), which spacer cam (22, 122, 222) comes into action over part of the angle of pivot of the hooked part (5, 105, 205), a region of the spacer cam which touches the abutment or the hooked part being at different distances from the axis of rotation of the hooked part, **characterised in that** the spacer cam (22, 122, 222) is formed on the hooked part (5, 105, 205).

2. Closure device according to claim 1, **characterised in that** the spacer cam (22, 122, 222) and the hook-end (20, 120, 220), which fits round the abutment (19, 119, 219) in the closed position, form between them a entry opening (37, 137, 237) for the abutment (19, 119, 219).

3. Closure device according to one or more of claims 1 and 2, **characterised in that**, when the hooked part (5, 105, 205) is in the closed position, the spacing action of the spacer cam (22, 122, 222) is cancelled out.

4. Closure device according to one or more of claims 1 to 3, **characterised in that** the axis of pivot (6, 106, 206) of the hooked part (5, 105, 205) extends parallel to the longitudinal axis of the vehicle and the hooked part or parts (5, 105, 205) is/are actuatable by means of a central actuating member (4, 104, 204).

5. Closure device according to one or more of claims 1 to 4, **characterised in that** the hook-end (20, 120, 220) which fits round the abutment (19, 119, 219) occupies a substantially horizontal position in the closed position and has a receiving recess (43, 143, 243) for locking contact with the abutment (19, 119, 219).

## Revendications

1. Dispositif de verrouillage pour une capote de cabriolet (12) qui se fixe sur une partie de carrosserie (13), notamment de véhicules automobiles, comprenant au moins un élément de verrouillage (2, 102, 202) prévu du côté de la capote (12) et un appui complémentaire (19, 119, 219) sur le cadre de carrosserie (13)
l'élément de verrouillage (2, 102, 202) comprenant au moins un organe de verrouillage (5, 105, 205) mobile pour venir en prise ou se dégager de l'appui complémentaire (19, 119, 219), et l'organe de verrouillage (5, 105, 205) étant réalisé comme pièce en forme de crochet basculant, dans lequel
pour limiter la profondeur de pénétration de la partie de crochets (20, 120, 122) dans une pièce de réception (21, 121, 221) portant l'appui complémentaire (19, 119, 219), il est prévu une came d'écartement (22, 122, 222) qui agit dans une plage partielle de l'angle de basculement de l'organe de verrouillage (5, 105, 205), avec une zone de came d'écartement qui touche l'appui complémentaire ou l'organe de verrouillage et qui présente différentes distances par rapport à l'axe de rotation de l'organe de verrouillage,
**caractérisé en ce que**
la came d'écartement (22, 122, 222) étant formée sur l'organe de verrouillage (5, 105, 205).

2. Dispositif de verrouillage selon la revendication 1,
**caractérisé en ce que**
la came d'écartement (22, 122, 222) et l'extrémité de crochet (20, 120, 220) qui en position de verrouillage, entoure l'appui complémentaire (19, 119, 219), développent entre elles un orifice d'entrée (37, 137, 237) pour l'appui complémentaire (19, 119, 219).

3. Dispositif de verrouillage selon une ou plusieurs des revendications 1 et 2,
**caractérisé en ce que**
l'effet d'écartement des cames d'écartement (22, 122, 222) est neutralisé lorsque l'organe de verrouillage (5, 105, 205) est en position de verrouillage.

4. Dispositif de verrouillage selon une ou plusieurs des revendications 1 à 3,
**caractérisé en ce que**
l'axe de basculement (6, 106, 206) de l'organe de verrouillage (5, 105, 205) est parallèle à l'axe longitudinal du véhicule et les parties de crochets (5, 105, 205) sont actionnées par un organe d'actionnement centralisé (4, 104, 204).

5. Dispositif de verrouillage selon une ou plusieurs des revendications 1 à 4,
**caractérisé en ce qu'**
en position de verrouillage, l'extrémité de crochet (20, 120, 220) entourant l'appui complémentaire (19, 119, 219) prend une position essentiellement horizontale et comporte une découpe de réception (43, 143, 243) pour un appui bloqué contre l'appui complémentaire (19, 119, 219).
